# EUROPEAN PATENT SPECIFICATION

(11) **EP 3 559 513 B1**
(45) Date of publication and mention of the grant of the patent: **09.06.2021**
(21) Application number: 17851936.9
(22) Date of filing: 08.09.2017
(51) Int. Cl.: F16H 61/22, F16H 59/10, F16H 61/24

(54) **COMBINED LOCKING SYSTEM**
KOMBINIERTES VERRIEGELUNGSSYSTEM
SYSTÈME DE VERROUILLAGE COMBINÉ

(43) Date of publication of application: 30.10.2019
(73) Proprietor: Orau Orhan Otomotiv Kontrol Sistemleri Sanayii Anonim Sirketi, Nilufer/Bursa (TR)
(72) Inventor: KOSUCU, Sener, Nilüfer/Bursa (TR); PONNET, Philippe, Nilüfer/Bursa (TR)
(74) Representative: Yamankaradeniz, Kemal
(86) International application number: PCT/TR2017/050423
(87) International publication number: WO 2019/050488

(56) References cited:
- DE-A1- 19 913 835
- DE-A1-102005 053 610
- DE-A1-102008 022 561
- US-A1- 2017 114 892
- US-B2- 8 347 752

## Description

### Technical Field

Present invention relates to the gearboxes of the vehicles with automatic shifting system.

Present invention relates particularly to a combined locking system which enables blocking the movement of the first locking element, which immobilizes the lever by engaging into the vertical stage, in the downward direction via the index part, and which utilizes the lateral movement of the second locking element for unlocking which is in a position under the index part.

### State of the Art

US patent US8347752 entitled "Actuating device with shift carriage lock" gives an example to an automatic gear configuration used in the prior art. In general, in the vehicles incorporating such an automatic shifter there are P-R-N-D positions which enables different functions of the gear. There are particular rules in order to enable shifting between these positions. For instance shifting to the position (R) must be prevented for the vehicle moving in the forward direction. Otherwise unrecoverable failures might occur.

US2017114892A1 entitled "Shift lever device" relates a cable coupler is provided on a front side in a swinging direction of a shift lever, and a check mechanism is provided on a rear side thereof, respectively. Thus, the cable coupler, the shift lever, and the check mechanism are disposed along the swinging direction of the shift lever. A unit base including a shift lock mechanism is provided separately from a casing, and is housed and disposed in an opening of a right side wall of the casing. The opening is continuous to a detent hole. A first flange and a second flange are formed on peripheral edges of the detent hole.

DE19913835A1 entitled "Switching device for motor vehicles" relates to a switching device for motor vehicles, in particular commercial vehicles, comprising a housing, a hollow selector lever which is pivotally received in the housing within a selector gate about a selector axis for selecting different driving stages of the motor vehicle transmission, a rod displaceable in the selector lever against the force of at least one spring, a shift knob on the upper end of the selector lever facing the vehicle driver, one in the shift knob accommodated actuating device for the axial displacement of the rod, a guide member connected to the rod, which engages in a shifting link which defines the selector lever positions of the selector lever assigned to the individual driving stages, wherein the guide member out of at least one selector lever position by axially shifting the rod into a swivel link is transferable.

A locking mechanism which blocks the movement of the lever, in particular for the positions N-D and P is found nearly in of the all automatic shifting mechanisms. Said locking function is generally carried out electromechanically via a locking mechanism comprising a solenoid, in case the predefined conditions occur.

Another feature found within the automatic transmissions is to enable resting of the lever in the right position and providing a manual shifting feel to the driver. Because the feeling of shifting of the gear which are common to the manual transmission systems cannot be reflected in here, as these are not directly connected to the gearbox due to the constructions thereof. For this, in conventional implementations, an index part is used comprising channels and recesses with a specific geometry and in which a spring pin connected onto the lever is found. Said channels enable guiding whereas said recesses enable both the retention in the right position and the reflection of the shifting feel.

In the existing systems the locking mechanism and the system for the shifting feel are separately found and manufacturing and installation thereof are handled separately. Therefore manufacturing costs increase as well as the installation time and the labor. In addition to this, complexity of the system brings in the risks for failure.

As a result, the fact that there is a need for a combined locking system which enables blocking the movement of the first locking element, which immobilizes the lever by engaging inside the vertical locking shapes, in the downward direction via the index part, and which utilizes the lateral movement of the second locking element for unlocking which is in the lower position of the index part and insufficiency of the existing solutions have led to an improvement in the technical field.

### Object of the Invention

Present invention relates to a combined locking system meeting the aforementioned requirements, overcoming all the inconveniencies and providing further advantages.

Main object of the combined locking system of the present invention is to block the movement of the first locking element in the downward direction via the index part by engaging in the vertical direction locking shapes and to enable unlocking with the lateral movement of the second locking element located in a position under the index part. Thereby a simpler mechanism is provided by combining the index part which gives the manual shifting feel with the functions of the driving element via a piece so called second locking element. In order to unlock, the index part must move along in the vertical direction by moving the second locking element in the lateral direction and the first locking element must be released. The lateral movement of the second locking element is carried out by the driving element which is activated by an input signal from the control unit, in case the required conditions are met. Thus the manufacturing costs are significantly reduced by combining the lever locking mechanism with the systems reflecting the feel, which are otherwise separate from each other.

Another object of the invention is that the driving element is of solenoid type. Therefore one can take advantage of the compact structure of the solenoid technology and the quick response times.

In order to achieve the abovementioned objectives, a combined locking system has been developed which enables prevention of the movement of the first locking element via index part, which first locking element immobilizing the lever in the downward direction by engaging in the vertical locking shapes in automatic transmission systems and which utilizes the lateral movement of the second locking element disposed in a position under the index part for unlocking, represented by a combined locking system according to claim 1.

The developed combined locking system comprising a lever and a body, and which is configured to block a movement of the lever in different gear positions with respect to the combined locking system's body in automatic transmission systems, which comprises at least one first locking element which is arranged on said lever and which is movable bi-directionally along the axis the lever; at least one cover which is connected to said body as a complementary element and which includes the locking shapes thereon, wherein the locking shapes are arranged with respect to the lever axis and disposed in downward direction on the cover, and enables the immobilization of the lever in the respective gear position with the at least one first locking element engaged therein; at least one pin which is arranged on said first locking element; at least one channel which directs the lever by guiding it on said pin; multiple recesses which are arranged on said channel and which enable the immobilization of the lever in the respective gear positions; *further comprises:*
- at least one index part which incorporates said channel and the recesses thereon and which is movable with respect to the lever axis in a vertical direction;
- at least one second locking element which is disposed at a position under the index part with respect to said lever axis and which blocks the movement of the index part in the vertical direction;
- at least one locking index part which is arranged on the body and which enables a movement of the at least one second locking element in a lateral direction by guiding it;
- at least one driving element driving the movement of the second locking element in the lateral direction represented by a lateral axis;
- at least one control unit which is configured to control the function of driving the movement of the second locking element in the lateral direction or axis of said at least one driving element.

Preferred embodiments of the present invention are laid down in the dependent claims.

Structural features and characteristics and the advantages of the present invention will be understood more clearly in light of the detailed description with reference to the following figures and thus the evaluation should be carried out considering these figures and the detailed description.

### Figures for a Better Understanding of the Invention

In order for present invention to be constructed and for its advantages to be understood alongside with additional components, it is needed to be evaluated with the drawings disclosed herein below.
Figure 1: is the exploded view of the combined locking system of the present invention.
Figure 2: is the side inner view of the combined locking system of the present invention in its released position.
Figure 3: is the top inner view of the combined locking system of the present invention in its released position.
Figures - 4a, 4b, 4c, 4d, 4e: are the side views of the combined locking system of the present invention in different gear positions.

**Part References**

| | | | |
|---|---|---|---|
| 10 | Combined locking system | 52 | Channel |
| 20 | Body | 53 | Recess |
| 21 | Lock housing | 60 | Second locking element |
| 30 | Lever | 61 | Pushing surface |
| 31 | First locking element | 62 | Releaser |
| 32 | Pin | 63 | Vertical body |
| 40 | Cover | 70 | Driving element |
| 41 | Locking shapes | 71 | Control unit |
| 50 | Index part | 80 | Spring |
| 51 | Fitting surface | x | Lever axis |
| | | y | Lateral axis |

### Detailed Description of the Invention

Automatic transmission systems include generally four positions, short codes of which are P-R-N-D. In addition to these mentioned above there is a "+ -" position which corresponds to manual shifting. When in mentioned positions, the lever (30) is locked in a way that it cannot move with respect to its body (20). In order to achieve this, in general there are a first locking element (31) which is disposed on the lever (30) and is movable bi-directionally along the lever axis (x), and multiple locking shapes (41) which are disposed along the lever axis (x) and which enable immobilization of the lever (30) in its respective position by fitting of the first locking element (31). First locking element (31) rests immobile when fits into the locking shapes (41) of the respective position. In order to remobilize the lever (30), the first locking element (31) must be pushed and released from the locking shapes (41). In addition to this, by being guided along a channel (52), the pin (32) which is disposed on the first locking element (31) directs the lever (30). The recesses (53) arranged on the channel (52) on the other hand, enable the lever (30) to rest immobile in certain positions and provide the shifting feel to the driver.

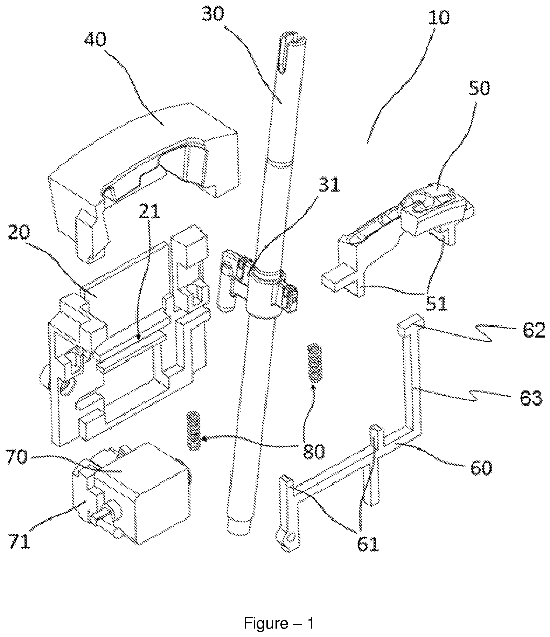

Thanks to the combined locking system (10) of the present invention, by combining the above mentioned locking system and shifting feeling reflective system, a simpler and a cost efficient system is provided. Figure 1 shows an exploded view of the combined locking system (10) of the present invention. Apart from the existing implementations the combined locking system (10) comprises an index part (50) which has channels (52) and recesses (53) thereon and which is movable along lever axis (x), a second locking element (60) which is disposed at a lower position of the index part (50) with respect to the lever axis (x) and which blocks the movement of the index part (50) in the vertical direction, a locking housing (21) which is arranged on the body (20) and which enables the movement of the second locking element (60) by guiding it along the lateral axis (y), the driving element (70) driving the movement of the second locking element (60) along the lateral axis (y), at least one control unit (71) controlling the functions of the driving element (70).

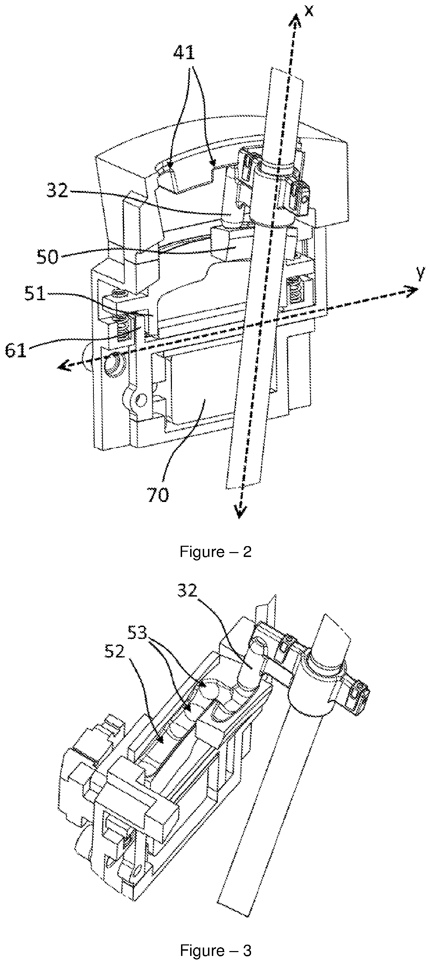

Figure 2 shows the side inner view of the combined locking system (10) of the present invention in its released position. Preferably, onto the body (20) which consists of two symmetrical pieces, a cover (40) is connected as a complementary and casing element. The locking shapes (41) are disposed preferably on the cover (40) in the downward direction. The first locking element (31) must move in the downward direction with respect to the lever axis (x) in order to be released from the locking shapes (41) and release the lever (30). This movement is blocked over the pin (32) by the index part (50), the details of which can be seen from Figure 3. Preferably there exist two springs (80) which exert a continuous power to the index part (50) in the upward direction. In order to be released, the index part (50) has to move in the downward direction with respect to the lever axis (x) as well, which movement is blocked by the second locking element (60).

The communication between the index part (50) and the second locking element (60) is achieved by preferably two fitting surfaces (51) which are arranged at the lower position of the index part (50) and by the pushing surfaces (61), the numbers of which are same as the formers, and which are arranged at the upper position of the second locking element (60) and which blocks the downward movement of the index part (50) by contacting the fitting surface (51). In a preferred embodiment, the fitting surface (51) and the pushing surface (61) are in an angled position in the movement direction. By this means, friction during the movement of the second locking element (60) in lateral axis (y) is minimized and the second locking element (60) does not encounter with an obstacle when taking its place under the index part (50). The driving element (70) driving the second locking element (60) is preferably of solenoid type.

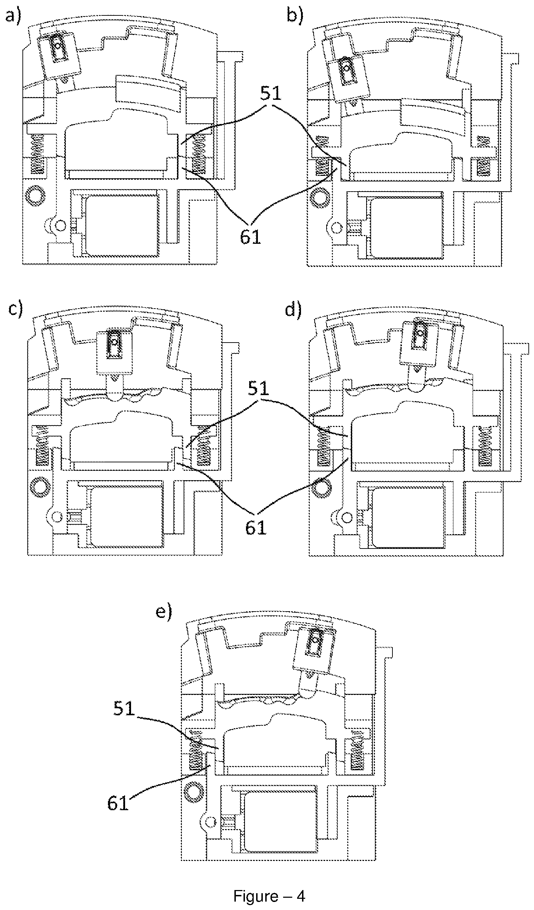

Figure 4 shows side views of the combined locking system (10) of the present invention in different gear positions. Combined locking system (10) is simply a locking mechanism which blocks the movement of the lever (30) by locking it into certain positions. Lever (30) is locked in P and N-D positions and is prevented from being engaged into other positions unless certain circumstances are provided. Solenoid driving element (70) is normally in its pulled position as seen in Figure 4a and fulfils its locking function. In order to unlock, the control unit (71) must electrically actuate the driving element (70) and enable it to push the piston and move the second locking element (60) connected to the end thereof in lateral axis (y). When in locked position, if one press the button on the lever (30) and try to move the first locking element (31) downward, it cannot be moved because of the obstacle posed by the index part (50) and thus shifting cannot be achieved.

As seen in Figure 4b, when the driving element (70) is actuated and the second locking element (60) retreats from the index part (50), the index part (50) is released. In this case, the first locking element (31) can be moved forward by pressing the button on the lever (30). Therefore the lever (30) can be released and be in a shiftable position. Since there is a continuous force on the index part (50) exerted by the spring (80) there exists a pressure between itself and the pin (32) and the feeling resembling the manual transmission is permanent. Different positions of the lever (30) can be seen in Figures 4c, 4d and 4e. In order to realize the movement of the lever (30), the button thereon must be pressed and the first locking element (30) must be pushed downward. Another requirement is of course the retraction of the second locking element (60) under the index part (50). In order for the driving element (70) to be actuated, the control unit must determine if the required conditions are met and must issue the required commands. After the shifting has finished, the first locking element (31) fits into the respective locking shapes (41). When the pin (32) moves up together with the first locking element (31), the index part (50) also moves up with the spring effect (80). In the meantime, via the movement provided by the driving element (70) the second locking element (60) returns back to its position and keeps the index part (50) again in its locked position.

As the lever (30) is moved between the gear positions, the pin (32) moves over the channels (52) and the recesses (52) and creates vibrations. The pin (32) therefore reflects the feeling of shifting by transmitting these vibrations to the lever (30) and then to the driver. At the same time the recesses (53) inside the index part (50) correspond to the exact gear positions. Thereby it makes sure that the lever (30) rests exactly at the right positions. The cover (40) ensures the other elements to stay together and function.

Vertical body (63) and releaser (62) provide that releasing the gear locking mechanism, manually. Vertical body (62) of releaser (63) which provides releasing of the lever (30) through pushing by hand when the vehicle is not working, breakdown situation or at vehicle service.

## Claims

1. A combined locking system (10) which comprises a lever (30) and a body (20) and which is configured to block a movement of the lever (30) in different gear positions with respect to the combined locking system's (10) body (20) in automatic transmission systems comprising:
• at least one first locking element (31) which is arranged on said lever (30) and which is movable bi-directionally along the axis (x) of the lever (30),
• at least one cover (40) which is connected to said body (20) as a complementary element and which includes the locking shapes (41) thereon,
∘ wherein the locking shapes (41) are arranged with respect to the lever axis (x) and disposed in downward direction on the cover, and enables the immobilization of the lever (30) in the respective gear position with the at least one first locking element (31) engaged therein,
• at least one pin (32) which is arranged on said first locking element (31),
• at least one channel (52) which directs the lever (30) by guiding it on said pin (32),
• multiple recesses (53) which are arranged on said channel (52) and which enable the immobilization of the lever (30) in the respective gear positions,
• at least one index part (50) which incorporates said channel (52) and recesses (53) thereon and which is movable with respect to the lever axis (x) in a vertical direction,
• at least one second locking element (60) which is disposed at a position under the index part (50) with respect to said lever axis (x) and which blocks the movement of the index part (50) in the vertical direction,
• at least one locking index part (21) which is arranged on the body (20) and which enables a movement of the at least one second locking element (60) in a lateral direction (y) by guiding it,
• at least one driving element (70) driving the movement of the second locking element (60) in the lateral direction represented by a lateral axis (y),
• at least one control unit (71) which is configured to control the function of driving the movement of the second locking element (60) in the lateral direction or axis (y) of said at least one driving element (70).

2. A combined locking system (10) according to claim 1 further comprising at least one spring (80) which exerts a permanent force to said index part (50) in an upward direction.

3. A combined locking system (10) according to claim 1 further comprising:
- at least one fitting surface (51) which is arranged under said index part (50),
- at least one pushing surface (61) which is arranged over said second locking element (60) and which blocks the vertical movement of the index part (50) by contacting with the fitting surface (51).

4. A combined locking system (10) according to claim 3 wherein said fitting surface (51) and/or the pushing surface (61) is in an angled position in the movement direction with respect to lateral axis (y).

5. A combined locking system (10) according to claim 1 wherein the driving element (70) arranged under said index part (50) is of solenoid type.

6. A combined locking system (10) according to claim 1 wherein said body (20) consists of two pieces which are symmetrical or non-symmetrical to each other.

## Patentansprüche

1. Kombiniertes Verriegelungssystem (10), das einen Hebel (30) und einen Körper (20) umfasst, und das so gestaltet ist, dass es eine Bewegung des Hebels (30) an verschiedene Gangstellungen in Bezug auf den Körper (20) des kombinierten Verriegelungssystems (10) in Automatikgetriebesystemen blockiert, umfassend:
• mindestens ein Verriegelungselement (31), das an dem Hebel (30) angeordnet ist, und das bidirektional entlang der Achse (x) des Hebels (30) beweglich ist,
• mindestens eine Abdeckung (40), die mit dem Körper (20) als ein komplementäres Element verbunden ist, und die daran die Verriegelungsformen (41) aufweist,
∘ wobei die Verriegelungsformen (41) im Verhältnis zu der Hebelachse (x) angeordnet sind und sich in einer Abwärtsrichtung auf der Abdeckung befinden, und wobei sie die Immobilisierung des Hebels (30) an den entsprechenden Gangstellungen mit mindestens einem sich darin in Eingriff befindenden ersten Verriegelungselement (31) ermöglichen,
• mindestens einen Stift (32), der an dem ersten Verriegelungselement (31) angeordnet ist,
• mindestens einen Kanal (52), der den Hebel (30) leitet, indem er diesen an dem Stift (32) führt,
• mehrere Aussparungen (53), die an dem Kanal (52) angeordnet sind und die Immobilisierung des Hebels (30) an den entsprechenden Gangstellungen ermöglichen,
• mindestens ein Indexteil (50), das den Kanal (52) und die Aussparungen (53) daran enthält, und das im Verhältnis zu der Hebelachse (x) in eine vertikale Richtung beweglich ist,
• mindestens ein zweites Verriegelungselement (60), das sich an einer Position unter dem Indexteil (50) im Verhältnis zu der Hebelachse (x) befindet, und das die Bewegung des Indexteils (50) in die vertikale Richtung blockiert,
• mindestens ein Verriegelungsindexteil (21), das an dem Körper (20) angeordnet ist, und das eine Bewegung des mindestens einen zweiten Verriegelungselements (60) in eine laterale Richtung (y) ermöglicht, indem es dieses führt,
• mindestens ein Antriebselement (70), das die Bewegung des zweiten Verriegelungselements (60) in die durch eine laterale Achse (y) dargestellte laterale Richtung antreibt,
• mindestens eine Steuereinheit (71), die so gestaltet ist, dass sie die Funktion des Antriebs der Bewegung des zweiten Verriegelungselements (60) in die laterale Richtung oder der Achse (y) des mindestens einen Antriebselements (70) steuert.

2. Kombiniertes Verriegelungssystem (10) nach Anspruch 1, das ferner mindestens eine Feder (80) umfasst, die eine permanente Kraft auf das Indexteil (50) in eine Aufwärtsrichtung ausübt.

3. Kombiniertes Verriegelungssystem (10) nach Anspruch 1, das ferner folgendes umfasst:
- mindestens eine Passfläche (51), die unter dem Indexteil (50) angeordnet ist,
- mindestens eine Druckfläche (61), die über dem zweiten Verriegelungselement (60) angeordnet ist und die vertikale Bewegung des Indexteils (50) durch Kontakt mit der Passfläche (51) blockiert.

4. Kombiniertes Verriegelungssystem (10) nach Anspruch 3, wobei sich die Passfläche (51) und/oder die Druckfläche (61) an einer Winkelposition in der Bewegungsrichtung in Bezug auf die laterale Achse (y) befindet.

5. Kombiniertes Verriegelungssystem (10) nach Anspruch 1, wobei das unter dem Indexteil (50) angeordnete Antriebssystem (70) ein Solenoidtyp ist.

6. Kombiniertes Verriegelungssystem (10) nach Anspruch 1, wobei der Körper (20) aus zwei Teilen besteht, die zueinander symmetrisch oder unsymmetrisch sind.

## Revendications

1. Système de verrouillage combiné (10) qui comprend un levier (30) et un corps (20) et qui est conçu pour bloquer un mouvement du levier (30) dans différentes positions d'engrenage par rapport au corps (20) du système de verrouillage combiné (10) dans des systèmes de transmission automatique comprenant :
• au moins un premier élément de verrouillage (31) qui est disposé sur ledit levier (30) et qui est mobile de manière bidirectionnelle le long de l'axe (x) du levier (30),
• au moins un couvercle (40) qui est relié audit corps (20) en tant qu'élément complémentaire et qui comprend les formes de verrouillage (41) sur celui-ci,
∘ les formes de verrouillage (41) étant disposées par rapport à l'axe de levier (x) et se trouvant dans une direction vers le bas sur le couvercle, et permettant l'immobilisation du levier (30) dans la position d'engrenage respective avec l'au moins un premier élément de verrouillage (31) en prise en leur sein,
• au moins une goupille (32) qui est disposée sur ledit premier élément de verrouillage (31),
• au moins un canal (52) qui dirige le levier (30) en le guidant sur ladite goupille (32),
• de multiples évidements (53) qui sont disposés sur ledit canal (52) et qui permettent l'immobilisation du levier (30) dans les positions d'engrenage respectives,
• au moins une partie d'index (50) qui incorpore ledit canal (52) et lesdits évidements (53) sur celle-ci et qui est mobile par rapport à l'axe de levier (x) dans une direction verticale,
• au moins un second élément de verrouillage (60) qui se trouve à une position sous la partie d'index (50) par rapport audit axe de levier (x) et qui bloque le mouvement de la partie d'index (50) dans la direction verticale,
• au moins une partie d'index de verrouillage (21) qui est disposée sur le corps (20) et qui permet un mouvement de l'au moins un second élément de verrouillage (60) dans une direction latérale (y) en le guidant,
• au moins un élément d'entraînement (70) entraînant le mouvement du second élément de verrouillage (60) dans la direction latérale représentée par un axe latéral (y),
• au moins une unité de commande (71) qui est conçue pour commander la fonction d'entraînement du mouvement du second élément de verrouillage (60) dans la direction latérale ou l'axe (y) dudit au moins un élément d'entraînement (70).

2. Système de verrouillage combiné (10) selon la revendication 1 comprenant en outre au moins un ressort (80) qui exerce une force permanente sur ladite partie d'index (50) dans une direction vers le haut.

3. Système de verrouillage combiné (10) selon la revendication 1 comprenant en outre :
- au moins une surface d'ajustement (51) qui est située sous ladite partie d'index (50),
- au moins une surface de poussée (61) qui est située sur ledit second élément de verrouillage (60) et qui bloque le mouvement vertical de la partie d'index (50) en entrant en contact avec la surface d'ajustement (51).

4. Système de verrouillage combiné (10) selon la revendication 3, ladite surface d'ajustement (51) et/ou la surface de poussée (61) étant dans une position angulaire dans la direction du mouvement par rapport à l'axe latéral (y).

5. Système de verrouillage combiné (10) selon la revendication 1, l'élément d'entraînement (70) disposé sous ladite partie d'index (50) étant de type solénoïde.

6. Système de verrouillage combiné (10) selon la revendication 1, ledit corps (20) étant composé de deux pièces qui sont symétriques ou non symétriques l'une par rapport à l'autre.
